# EUROPEAN PATENT APPLICATION

(11) **EP 3 923 370 A1**
(43) Date of publication of application: **15.12.2021**
(21) Application number: 20822030.1
(22) Date of filing: 02.06.2020
(51) Int. Cl.: H01M 2/10, H01M 2/20, H01M 10/653, H01M 10/655

(54) **BATTERY MODULE, MANUFACTURING METHOD THEREFOR, AND BATTERY PACK**

(30) Priority: 12.06.2019 KR 20190069228; 29.05.2020 KR 20200064755
(71) Applicant: LG ENERGY SOLUTION, LTD., Seoul 07335 (KR)
(72) Inventor: CHOI, Jonghwa, Daejeon 34122 (KR); KIM, Sung Dae, Daejeon 34122 (KR); SEONG, Junyeob, Daejeon 34122 (KR); PARK, Myungki, Daejeon 34122 (KR)
(74) Representative: Plasseraud IP
(86) International application number: PCT/KR2020/007146
(87) International publication number: WO 2020/251207

(57) **Abstract**

A battery module according to one embodiment of the present disclosure comprises a battery cell stack in which a plurality of battery cells are stacked, a module frame that accommodates the battery cell stack and has an open upper part, and an upper plate covering the battery cell stack on the open module frame, wherein the module frame includes a bottom part and two side surface parts facing each other, the bottom part includes a first part and a second part, the first part is located at the edge based on the longitudinal direction of the battery cell, the second part is located inside the first part, and the thickness of the first part is thinner than that of the second part.

## Description

### [TECHNICAL FIELD]

### Cross Citation with Related Application(s)

This application claims the benefit of Korean Patent Application No. 10-2019-0069228 filed on June 12, 2019 Korean Patent Application No. 10-2020-0064755 filed on May 29, 2020 in the Korean Intellectual Property Office, the disclosures of which are incorporated herein by reference in their entirety.

The present disclosure relates to a battery module, a method of manufacturing the same and a battery pack, and more particularly, to a battery module that improves space utilization rate and minimizes damage to parts, a method of manufacturing the same and a battery pack.

### [BACKGROUND ART]

Secondary batteries, which are easily applied to various product groups and has electrical characteristics such as high energy density, are universally applied not only for a portable device but also for an electric vehicle (EV) or a hybrid electric vehicle (HEV), an energy storage system or the like, which is driven by an electric driving source. Such secondary battery is attracting attention as a new environment-friendly energy source for improving energy efficiency since it gives a primary advantage of remarkably reducing the use of fossil fuels and also does not generate by-products from the use of energy at all.

Small-sized mobile devices use one or several battery cells for each device, whereas middle- or large-sized devices such as vehicles require high power and large capacity. Therefore, a middle- or large-sized battery module having a plurality of battery cells electrically connected to one another is used.

Preferably, the middle- or large-sized battery module is manufactured so as to have as small a size and weight as possible. Consequently, a prismatic battery or a pouch-shaped battery, which can be stacked with high integration and has a small weight to capacity ratio, is usually used as a battery cell of the middle- or large-sized battery module. Meanwhile, in order to protect the cell stack from external shock, heat, or vibration, the battery module may include a frame member whose front and back surfaces are opened so as to accommodate the battery cell stack in an internal space.

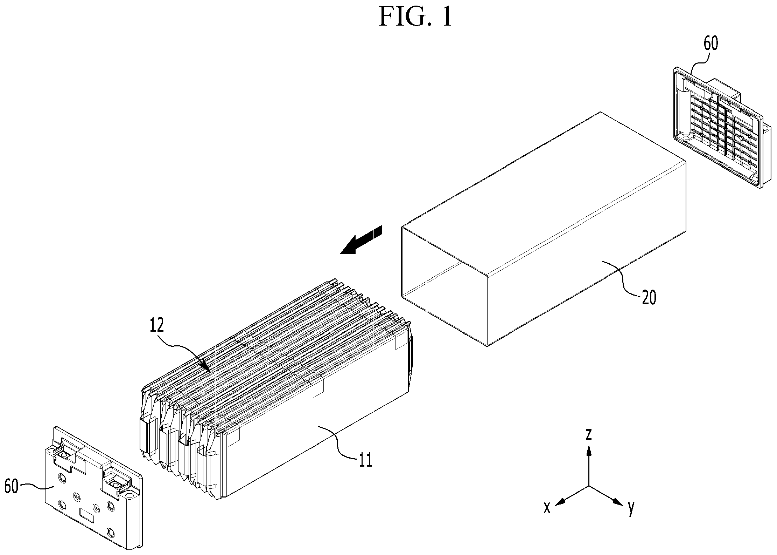

FIG. 1 is a perspective view showing a battery module having a conventional mono frame.

Referring to FIG. 1, the battery module may include a battery cell stack 12 formed by stacking a plurality of battery cells 11, a mono frame 20 whose front and back surfaces are opened so as to cover the battery cell stack 12, and an end plate 60 covering the front and back surfaces of the mono frame 20. To form such a battery module, as shown by the arrow in FIG. 1, horizontal assembly is required so that the battery cell stack 12 is inserted into open front surface or back surface of the mono frame 20 along the X-axis direction. However, it is necessary to ensure a sufficient clearance between the battery cell stack 12 and the mono frame 20 so that such horizontal assembly can be stabilized. Here, the clearance means a gap generated by fitting or the like. If the clearance is small, damage to parts may occur during horizontal assembly. Therefore, in consideration of the maximum height of the battery cell stack 12 and the assembly tolerance in the insertion process, the height of the mono frame 20 needs to be designed to be large and thus, unnecessarily wasted space may occur.

### [DETAILED DESCRIPTION OF THE INVENTION]

### [Technical Problem]

The present disclosure has been made to solve the above-mentioned problems, and an object of the present disclosure to provide a battery module that improves space utilization rate and minimizes damage to parts by modifying the structure of the frame member that covers the battery cell stack, a method of manufacturing the same and a battery pack.

However, the problem to be solved by embodiments of the present disclosure is not limited to the above-described problems, and can be variously expanded within the scope of the technical idea included in the present disclosure.

### [TECHNICAL SOLUTION]

A battery module according to one embodiment of the present disclosure comprises a battery cell stack in which a plurality of battery cells are stacked, and a module frame that accomodates the battery cell stack, with the module frame including a bottom part, two side surface parts facing each other and an upper plate, wherein the bottom part includes a first part and a second part, the first part is located at the edge based on the longitudinal direction of the battery cell, the second part is located inside the first part, and a thickness of the first part is thinner than that of the second part.

The battery module further includes a busbar frame that is connected to the battery cell stack, the module frame is opened at both sides facing each other based on the direction in which the electrode leads of the battery cell stack protrude, and the busbar frame is connected to the battery cell stack on open both sides of the module frame, and wherein the bus bar frame may include a main frame disposed perpendicular to a direction in which the electrode leads protrude, and a bent part extending from a lower part of the main frame.

The bent part may be located on the first part of the bottom part.

The sum of the thickness of the bent part and the thickness of the first part may be thinner than that of the second part.

The battery cell may include a protrusion part formed in a width direction, and the protrusion part may be located on the bent part.

The battery module may further include a pad part that is located between the second part and the battery cell stack.

The battery module may further include a thermally conductive resin layer located between the second part and the battery cell stack, and the pad part is located between the thermally conductive resin layer and the first part.

The bottom part and the two side surface parts facing each other of the module frame have a U-shaped frame structure with an open upper part, the U-shaped frame is coupled to the upper plate, and a lower surface of the battery cell stack perpendicular to the stacking direction of the plurality of battery cells may be attached to the bottom part of the module frame.

The battery module may further include an end plate coupled to each of open both sides of the module frame, and the open both sides of the module frame may face each other based on the direction in which the electrode leads of the battery cell laminate protrude.

The side surface part of the module frame may include a round part formed along an inner edge of the side surface part.

A battery pack according to another embodiment of the present disclosure includes the above-mentioned battery module.

A method of manufacturing a battery module according to another embodiment of the present disclosure comprises the steps of: attaching a battery cell stack to the bottom part of the frame, which includes an open upper part, a bottom part and two side surface parts facing each other, attaching an upper plate so as to cover the battery cell stack at the open frame upper part, coupling the upper plate and the side surface part of the frame, and coupling end plates to each of the open both sides of the frame, wherein the battery cell stack is attached to the bottom part of the frame while moving in a direction perpendicular to the bottom part of the frame.

The method of manufacturing the battery module may further include a step of connecting the battery cell stack and the bus bar frame while moving the busbar frame in a direction opposite to the direction in which the electrode leads of the battery cells included in the battery cell stack protrude, before attaching the battery cell stack to the bottom part of the frame.

The method of manufacturing the battery module may further include a step of coating a thermally conductive resin onto the bottom part of the frame before attaching the battery cell stack to the bottom part of the frame.

The method of manufacturing the battery module may further include a step of forming a pad part on the bottom part of the frame before the step of coating the thermally conductive resin, and the pad part may guide the coating position of the coated thermally conductive resin.

The battery cell stack may be inserted into the bottom part of the frame in a direction perpendicular to a stacking direction of a plurality of battery cells included in the battery cell stack.

### [ADVANTAGEOUS EFFECTS]

According to the embodiments, the U-shaped frame can be implemented to thereby reduce a clearance between the battery cell stack and the frame and improve a space utilization rate as compared with the prior art.

In addition, it is possible to remove the protective cover necessary to prevent damage during assembly.

Further, by processing the edge of the bottom part of the U-shaped frame, the gap between the battery cell stack and the frame can be reduced, thereby improving space utilization in the height direction.

### [BRIEF DESCRIPTION OF THE DRAWINGS]

FIG. 1 is an exploded perspective view showing a battery module having a conventional mono frame.
FIG. 2 is an exploded perspective view showing a battery module according to an embodiment of the present disclosure.
FIG. 3 is a perspective view showing a state in which the components of the battery module of FIG. 2 are combined.
FIG. 4 is a perspective view showing one battery cell included in the battery cell stack of FIG. 2.
FIG. 5 is a perspective view showing a U-shaped frame in the battery module of FIG. 2.
FIG. 6 is a perspective view showing a busbar frame in the battery module of FIG. 2.
FIG. 7 is a cross-sectional view taken along the XZ plane in the longitudinal direction of the battery cell stack in FIG. 3.
FIG. 8 is a cross-sectional view of a battery module corresponding to the comparative example of FIG. 7.
FIG. 9 is a perspective view showing a modified embodiment of a side surface part of a U-shaped frame in the battery module of FIG. 2.
FIG. 10 is a perspective view showing a U-shaped frame corresponding to the comparative example of FIG. 9.
FIGS. 11 to 13 are views showing a method of manufacturing a battery module according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Parts that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a part is referred to as "including" a certain component, it means that it can further include other components, without excluding the other components, unless otherwise stated.

Further, throughout the specification, when referred to as "planar", it means when a target portion is viewed from the top, and when referred to as "cross-sectional", it means when a target portion is viewed from the side of a cross section cut vertically.

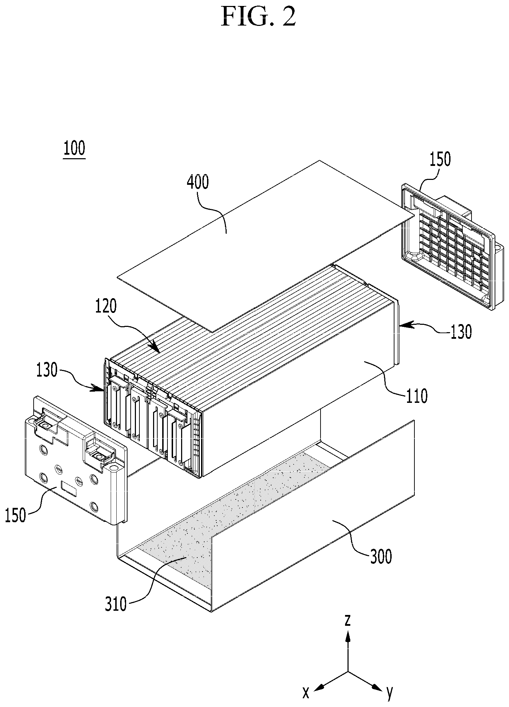

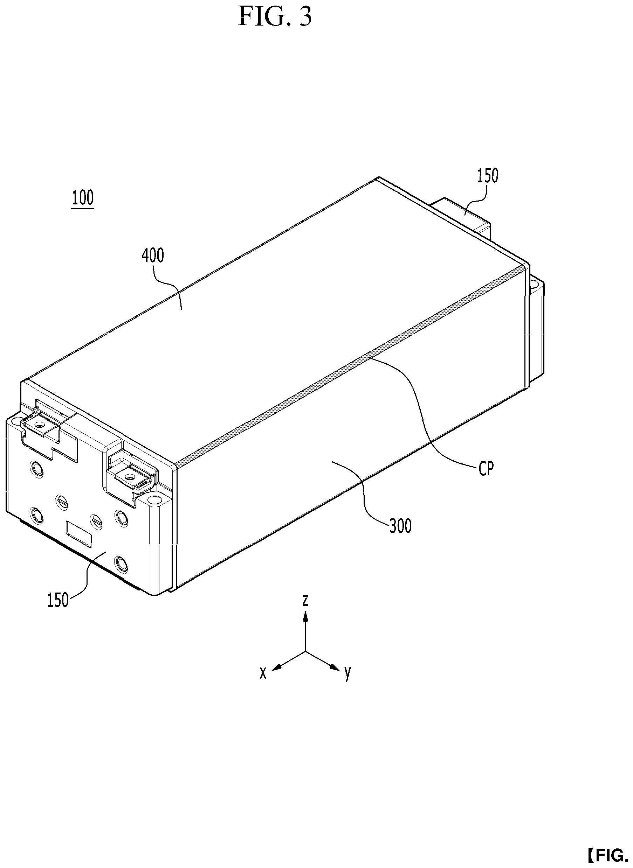

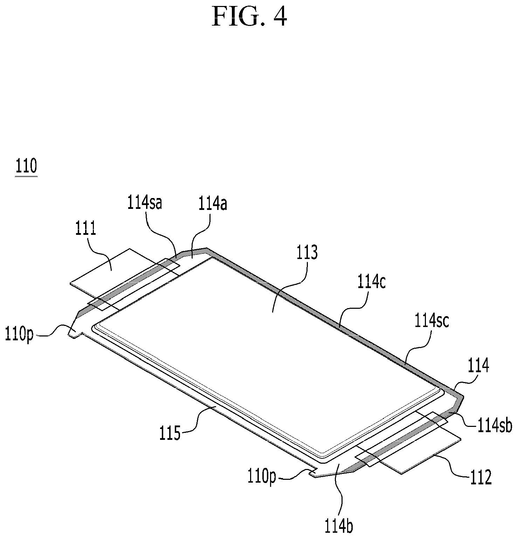

FIG. 2 is an exploded perspective view showing a battery module according to an embodiment of the present disclosure. FIG. 3 is a perspective view showing a state in which the components of the battery module of FIG. 2 are combined. FIG. 4 is a perspective view showing one battery cell included in the battery cell stack of FIG. 2.

Referring to FIG. 2 and FIG. 3, the battery module 100 according to the present embodiment includes a battery cell stack 120 including a plurality of battery cells 110, an U-shaped frame 300 whose upper, front and back surfaces are opened, an upper plate 400 covering an upper part of the battery cell stack 120, end plates 150 located on the front surface and the back surface of the battery cell stack 120, respectively, and a busbar frame 130 located between the battery cell stack 120 and the end plate 150.

When the open both sides of the U-shaped frame 300 are referred to as a first side and a second side, respectively, the U-shaped frame 300 consists of a plate-shaped structure that is bent so as to continuously cover the front, lower and back surfaces adjacent to each other, among the remaining outer surfaces excluding the surface of the battery cell stack 120 corresponding to the first side and the second side. The upper surface corresponding to the lower surface of the U-shaped frame 300 is opened.

The upper plate 400 has a single plate-shaped structure that covers the remaining upper surface excluding the front, lower and back surfaces that are covered by the U-shaped frame 300. The U-shaped frame 300 and the upper plate 400 may form a structure covering the battery cell stack 120 by being coupled by welding or the like in a state in which mutually corresponding edge parts are in contact with each other. That is, the U-shaped frame 300 and the upper plate 400 may have a coupling part (CP) formed at mutually corresponding edge parts by a coupling method such as welding.

The battery cell stack 120 includes a plurality of battery cells 110 that are stacked in one direction, and the plurality of battery cells 110 may be stacked in the Y-axis direction as shown in FIG. 2. The battery cell 110 is preferably a pouch-shaped battery cell. For example, referring to FIG. 4, the battery cell 110 according to the present embodiment has a structure in which two electrode leads 111 and 112 face each other and project from one end part 114a and the other end part 114b of the battery body 113, respectively. The battery cell 110 is manufactured by adhering both end parts 114a and 114b of the case 114 and both side surfaces 114c connecting them in a state where the electrode stack (not shown) was housed in the battery case 114. In other words, the battery cell 110 according to the present embodiment has a total of three sealing parts 114sa, 114sb and 114sc, the sealing parts 114sa, 114sb and 114sc have a structure that is sealed by a method such as thermal fusion, and the remaining other one side part may be formed of a connecting part 115. Between both end parts 114a and 114b of the battery case 114 may be defined as the longitudinal direction of the battery cell 110, and between the one side portion 114c connecting the both end parts 114a and 114b of the battery case 114 and the connection part 115 may be defined as the width direction of the battery cell 110.

The connection part 115 is an area extending long along one border of the battery cell 110, and a protrusion part 110p of the battery cell 110 may be formed at an end part of the connection part 115. The protrusion part110p may be formed on at least one of both end parts of the connection part 115, and may protrude in a direction perpendicular to a direction in which the connection part 115 extends. The protrusion part 110p may be located between one of the sealing portions 114sa and 114sb of both end parts 114a and 114b of the battery case 114 and the connection part 115.

The battery case 114 is generally composed of a laminated structure of a resin layer/metal thin film layer/resin layer. For example, in the case where the surface of the battery case is composed of an O (oriented)-nylon layer, when a plurality of battery cells are stacked in order to form a middle- or large-sized battery module, they tend to slip easily due to an external impact. Therefore, in order to prevent this and maintain a stable laminated structure of the battery cells, an adhesive member, for example, a cohesive type adhesive agent such as a double-sided tape or a chemical adhesive agent coupled by a chemical reaction during coupling, can be attached to the surface of the battery case to form a battery cell stack 120. In the present embodiment, the battery cell stack 120 is stacked in the Y-axis direction, is housed inside the U-shaped frame 300 in the Z-axis direction, and cooled by a thermally conductive resin layer described later. As a comparative example thereto, there is a case in which the battery cells are formed of cartridge-shaped parts, and the fixing between the battery cells is made by assembling the battery module frame. In this comparative example, due to the presence of a cartridge-shaped component, there is little or no cooling action, or the cooling may proceed toward the surface of the battery cell, and the cooling does not properly proceed in the height direction of the battery module.

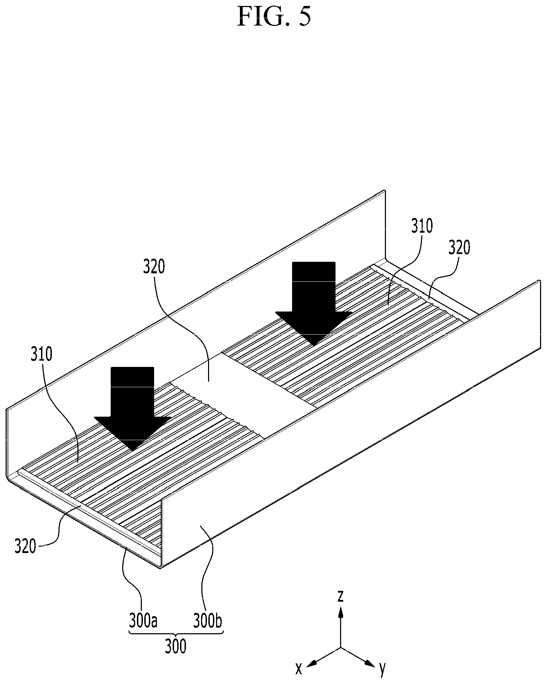

FIG. 5 is a perspective view showing a U-shaped frame in the battery module of FIG. 2.

Referring to FIG. 5, the U-shaped frame 300 according to the present embodiment includes a bottom part 300a and two side portions 300b facing each other. Before the battery cell stack 120 described in FIG. 2 is attached to the bottom part 300a of the U-shaped frame 300, a thermally conductive resin is coated onto the bottom part 300a of the U-shaped frame 300, and the thermally conductive resin is cured to form the thermally conductive resin layer 310.

Before forming the thermally conductive resin layer 310, that is, before the coated thermally conductive resin is cured, the battery cell stack 120 may be attached to the bottom part 300a of the U-shaped frame 300 while moving along a direction perpendicular to the bottom part 300a of the U-shaped frame 300. Then, the thermally conductive resin layer 310 formed by curing the thermally conductive resin is located between the bottom part 300a of the U-shaped frame 300 and the battery cell stack 120. The thermally conductive resin layer 310 may serve to transfer heat generated from the battery cell 110 to the bottom of the battery module 100 and fix the battery cell stack 120.

The battery module according to the present embodiment may further include a pad part 320 formed on the bottom part 300a of the U-shaped frame 300. The pad part 320 may guide the coating position of the thermally conductive resin or prevent the thermally conductive resin from overflowing to the outside of the bottom part 300a, and at least one pad part may be formed. In FIG. 5, it is shown that one pad part 320 is formed at the center of the bottom part 300a, and one pad part 320 is formed at both end parts of the bottom part 300a based on the X-axis direction. The size, position, number and the like of the pad part 320 may be modified in consideration of the coating amount of the thermally conductive resin and the like. The pad part 320 may be formed of an insulating film. In this case, the pad part 320 may be formed of a material such as polyurethane foam or rubber so that the thermally conductive resin may be compressed by contacting the battery cell 110 on the bottom part 300a.

Referring back to FIGS. 2 and 3, the widths of the side surface part 300b and the upper plate 400 of the U-shaped frame 300 according to the present embodiment may be identical to each other. In other words, the edge part along the X-axis direction of the upper plate 400 and the edge part along the X-axis direction of the side surface part 300b of the U-shaped frame 300 can directly meet and be coupled by a method such as welding.

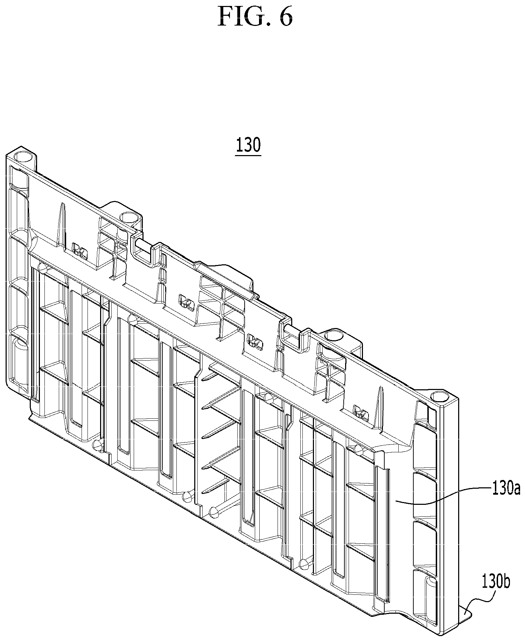

FIG. 6 is a perspective view showing a busbar frame in the battery module of FIG. 2.

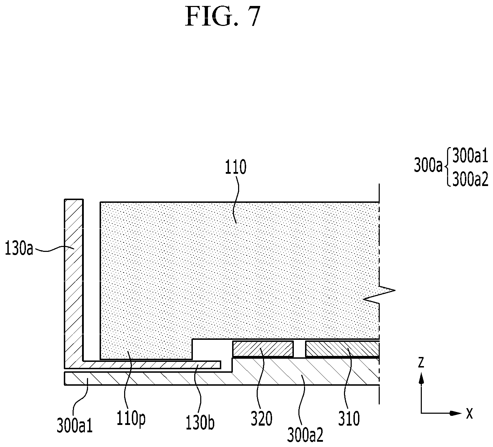

Referring to FIG. 6, the busbar frame 130 according to the present embodiment includes a main frame 130a disposed perpendicular to a direction in which the electrode leads 111 and 112 protrude as shown in FIG. 4, and a bent part 130b extending from the bottom of the main frame 130a. The busbar frame 130 is connected to the battery cell stack 120 as described in FIGS. 2 and 3. The main frame 130a may have a structure in which the electrode leads pass through a slit and couple with a busbar. The bent part 130b may be bent at approximately 90 degrees with respect to the main frame 130a and may be located on the bottom part 300a of the U-shaped frame 300. The bent part 130b and peripheral configuration will be further described with reference to FIG. 7.

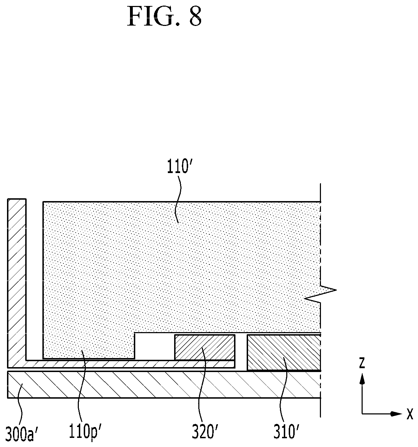

FIG. 7 is a cross-sectional view taken along the XZ plane in the longitudinal direction of the battery cell stack in FIG. 3. FIG. 8 is a cross-sectional view of a battery module corresponding to the comparative example of FIG. 7.

Referring to FIG. 7, the battery cell 110 according to the present embodiment includes a protrusion part 110p formed in the width direction, and the protrusion part 110p is located on the bent part 130b. Here, the width direction of the battery cell 110 may be the Z-axis direction of FIG. 7. The bottom part 300a of the U-shaped frame according to the present embodiment includes a first part 300a1 and a second part 300a2, the first part 300a1 is located at the edge based on the longitudinal direction of the battery cell 110, and the second part 300a2 is located inside the first part 300a1. In this case, the thickness of the first part 300a1 is preferably thinner than the thickness of the second part 300a2. Here, the longitudinal direction of the battery cell 110 may be the X-axis direction of FIG. 7.

Referring to FIGS. 6 and 7, in the present embodiment, the bent part 130b of the busbar frame 130 is located at the first part 300a1 of the bottom part 300a of the U-shaped frame. In this case, the sum of the thickness of the bent part 130b and the thickness of the first part 300a1 is preferably thinner than the thickness of the second part 300a2. This is because it is possible to prevent the protrusion part 110p of the battery cell 110 from flowing due to external impact by being caught by a step level between the first part 300a1 and the second part 300a2. In addition, it is possible to reduce the gap between the battery cell 110 and the frame through the processing of the bottom part 300a of the U-shaped frame. This gap reduction effect can maximize the overall space efficiency by causing a gap reduction effect and synergy that can be obtained by assembling in the height direction. The processing of the bottom part 300a of the U-shaped frame may form a U-shaped frame structure and at the same time, can form a step level at the bottom part 300a. Press molding or NC (numerical control work) processing may be used to form such a step level.

The pad part 320 is located between the second part 300a2 of the bottom part 300a and the battery cell 110, and a thermally conductive resin layer 310 is located inside the pad part 320. That is, the pad portion 320 may be located between the thermally conductive resin layer 310 and the first part 300a1 of the bottom part 300a to define a position where the thermally conductive resin layer 310 is formed.

Referring to FIG. 8, the thickness of the bottom part 300a' of the U-shaped frame is uniform as compared with the embodiment of FIG. 7. When the battery cells 110' and the protrusion parts 110p' having the same size as the battery cells 110 described in FIG. 7 are attached to the bottom part 300a' of the U-shaped frame, as there is no step level as in the bottom part 300a' of FIG. 7, the heights of the thermally conductive resin layer 310' and the pad part 320' can be increased. Therefore, as compared with the comparative example of FIG. 8, the clearance between the battery cell 110 and the frame can be reduced as in the example of FIG. 7 to improve the space utilization rate, and also the thickness of the thermally conductive resin layer 310 can be reduced, thereby reducing the amount of thermally conductive resin used to form the thermally conductive resin layer 310.

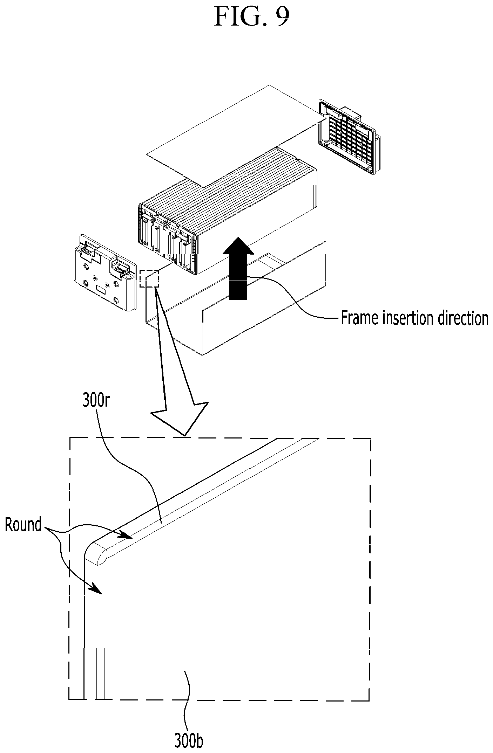

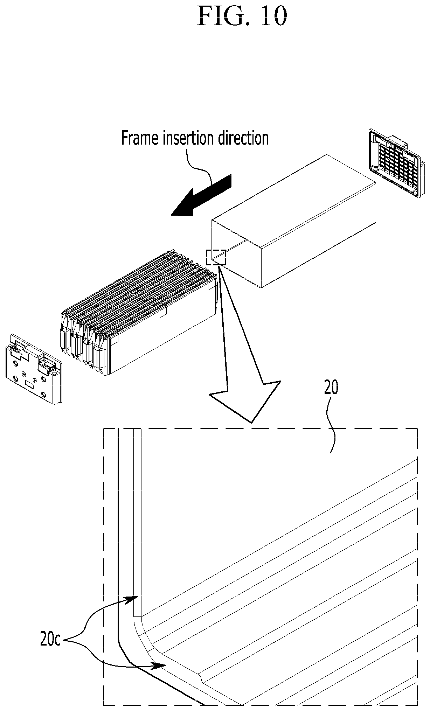

FIG. 9 is a perspective view showing a modified embodiment of a side surface part of a U-shaped frame in the battery module of FIG. 2. FIG. 10 is a perspective view showing a U-shaped frame corresponding to the comparative example of FIG. 9.

Referring to FIG. 9, in the U-shaped frame according to the present embodiment, the side surface part 300b may include a round part 300r formed along the inner edge of the side surface part 300b. Referring to FIG. 10, there is no choice but to insert the mono frame 20 into the battery cell stack in a horizontal direction as shown by the arrow. When a cut surface is formed in the process of forming the mono frame 20, in order to remove the burr of the cut surface, the mono frame 20 may be chamfered 20c at the entrance where insertion into the battery cell stack is started. In this case, separate processing costs may be incurred, but when the U-shaped frame is formed as shown in FIG. 3, molding can be performed by pressing, and thus, it is not necessary to remove burrs on the cut surface without incurring a separate processing cost. Furthermore, as shown in FIG. 9, when the battery cell stack is attached to the U-shaped frame, a round part 300r is formed in the insertion direction, thereby minimizing the possibility of damage during the insertion of the battery cell stack, and the round part 300r can also be molded together when forming a U-shaped frame through press processing, so that separate processing costs can be reduced.

Hereinafter, an example of a method of manufacturing a battery module according to the present embodiment described above will be described.

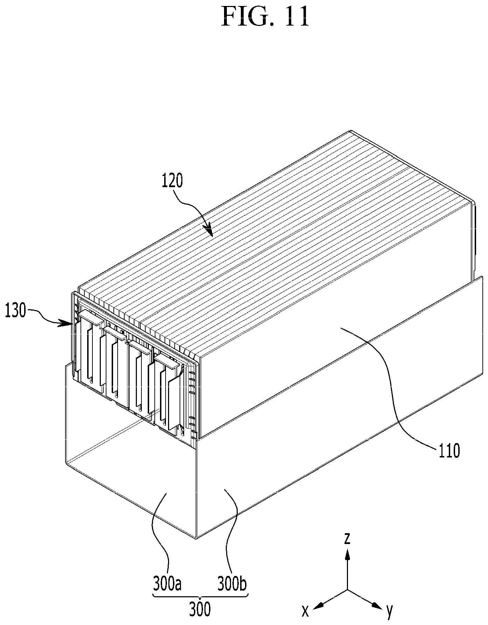

FIGS. 11 to 13 are views showing a method of manufacturing a battery module according to another embodiment of the present disclosure.

Referring to FIG. 11, the method of manufacturing a battery module according to the present embodiment includes a step of stacking the battery cell stack 120 on the bottom part 300a of the U-shaped frame 300 with an open upper part. At this time, the battery cell laminate 120 is preferably inserted into the bottom part 300a of the U-shaped frame 300 in a direction perpendicular to the stacking direction (Z-axis direction) of the plurality of battery cells 110 included in the battery cell stack 120.

The battery module manufacturing method according to the present embodiment may, before attaching the battery cell stack 120 to the bottom part 300a of the U-shaped frame 300, further include a step of connecting the battery cell stack 120 and the busbar frame 130 while moving the busbar frame 130 in a direction opposite to the direction in which the electrode leads of the battery cells 110 included in the battery cell stack 120 protrude. In addition, the method of manufacturing the battery module may further include a step of a thermally conductive resin onto the bottom part 300a of the U-shaped frame 300 before attaching the battery cell stack 120 to the bottom part 300a of the U-shaped frame 300. The method may further include a step of forming the pad part 320 described in FIG. 5 on the bottom part 300a of the U-shaped frame 300, before attaching the battery cell stack 120 to the bottom part 300a of the U-shaped frame 300. Referring to FIGS. 5 and 11, when the thermally conductive resin is coated between the pad parts 320, the pad part 320 not only can guide the coating position of the thermally conductive resin, but also can prevent the thermally conductive resin from overflowing, and it can easily adjust the coating amount of the thermally conductive resin.

In contrast, a thermally conductive resin layer for heat transfer and fixing of the cell stack may be formed between the lower part of the battery cell stack 12 described in FIG. 1 and the mono frame 20. In general, after inserting the battery cell stack 12 into the mono frame 20, a thermally conductive resin can be inserted through an injection hole formed in the mono frame 20, to thereby form a thermally conductive resin layer. However, in the case of the above injection method, due to the clearance of parts in each battery module, quantitative injection of the thermal conductive resin is difficult, and there is a limit to forming a thermally conductive resin layer having a uniform thickness.

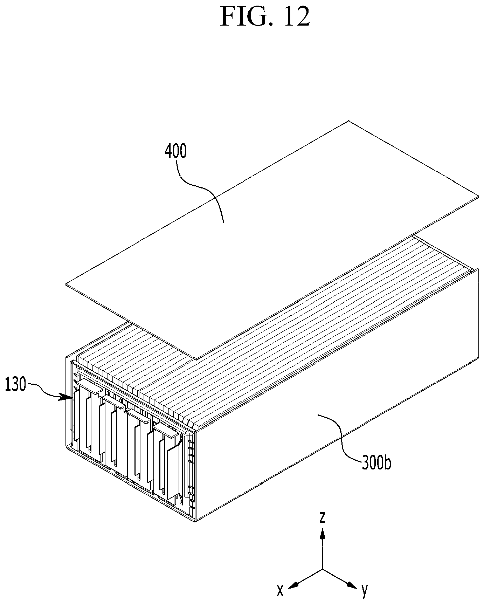

Referring to FIG. 12, the method of manufacturing the battery module according to the present embodiment includes a step of attaching the upper plate 400 so that the battery cell stack 120 is covered by the upper part of the open U-shaped frame 300. In the present embodiment, since the upper plate 400 is coupled to the upper part of the U-shaped frame 300 in the Z-axis direction, which is the vertical direction, by welding or the like. In the process of inserting the mono frame 20 of FIG. 1 into the battery cell stack 12, a protective cover (not shown) required for protecting the battery cells 11 may be omitted.

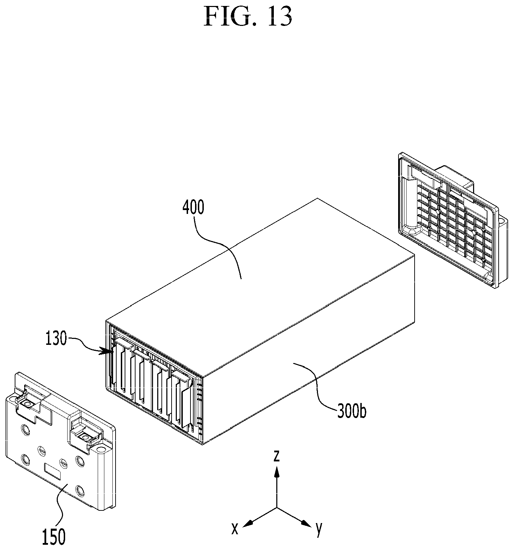

Referring to Figure 13, the method of manufacturing the battery module according to the present embodiment includes a step of coupling the upper plate 400 and the side part 300b of the U-shaped frame, and a step of coupling the end plates 150 to each of the open both sides of the U-shaped frame. A welding method, a bonding method using an adhesive agent, a bolt coupling method, rivet and tape bonding methods, etc. can be used in order to couple the upper plate 400 and the side surface part 300b of the U-shaped frame.

Meanwhile, one or more battery modules according to an embodiment of the present disclosure can be packaged in a pack case to form a battery pack.

The above-mentioned battery module and a battery pack including the same may be applied to various devices. These devices may be applied to vehicles such as an electric bicycle, an electric vehicle, a hybrid vehicle, but the present disclosure is not limited thereto but can be applied to various devices that can use the battery module and the battery pack including the same, which also belongs to the scope of the present disclosure.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [DESCRIPTION OF REFERENCE NUMERALS]

100: battery module
110p: protrusion part
130a: main frame
130b: bent part
150: end plate
300: U-shaped frame
400: upper plate

## Claims

1. A battery module according to one embodiment of the present disclosure comprises a battery cell stack in which a plurality of battery cells are stacked, and a module frame that accommodates the battery cell stack, with the module frame including a bottom part, two side surface parts facing each other and an upper plate,
wherein the bottom part includes a first part and a second part, the first part is located at the edge based on the longitudinal direction of the battery cell, the second part is located inside the first part, and a thickness of the first part is thinner than that of the second part.

2. The battery module according to claim 1, further comprising a busbar frame that is connected to the battery cell stack,
wherein the module frame is opened at both sides facing each other based on the direction in which the electrode leads of the battery cell stack protrude, and the busbar frame is connected to the battery cell stack on open both sides of the module frame, and
wherein the bus bar frame includes a main frame disposed perpendicular to a direction in which the electrode leads protrude, and a bent part extending from a lower part of the main frame.

3. The battery module according to claim 2, wherein
the bent part is located on the first part of the bottom part.

4. The battery module according to claim 3, wherein
the sum of the thickness of the bent part and the thickness of the first part is thinner than that of the second part.

5. The battery module according to claim 4, wherein
the battery cell includes a protrusion part formed in a width direction, and the protrusion part is located on the bent part.

6. The battery module according to claim 1, further comprising a pad part that is located between the second part and the battery cell stack.

7. The battery module according to claim 6, further comprising: a thermally conductive resin layer located between the second part and the battery cell stack, wherein the pad part is located between the thermally conductive resin layer and the first part.

8. The battery module according to claim 1, wherein
the bottom part and the two side surface parts facing each other of the module frame have a U-shaped frame structure with an open upper part, the U-shaped frame is coupled to the upper plate, and
a lower surface of the battery cell stack perpendicular to the stacking direction of the plurality of battery cells is attached to the bottom part of the module frame.

9. The battery module according to claim 1, further comprising: an end plate coupled to each of the open both sides of the module frame, wherein the open both sides of the module frame face each other based on the direction in which the electrode leads of the battery cell laminate protrude.

10. The battery module according to claim 1, wherein the distance between the two side parts is the same as the width of the upper plate

11. The battery module according to claim 1, wherein
the side surface part of the module frame includes a round part formed along an inner edge of the side surface part.

12. A method of manufacturing a battery module comprising the steps of:
attaching a battery cell stack to the bottom part of the frame, which includes an open upper part, a bottom part and two side surface parts facing each other,
attaching an upper plate so as to cover the battery cell stack at the open frame upper part,
coupling the upper plate and the side surface part of the frame, and
coupling end plates to each of the open both sides of the frame,
wherein the battery cell stack is attached to the bottom part of the frame while moving in a direction perpendicular to the bottom part of the frame.

13. The method of manufacturing a battery module according to claim 12, further comprising:
a step of connecting the battery cell stack and the bus bar frame while moving the busbar frame in a direction opposite to the direction in which the electrode leads of the battery cells included in the battery cell stack protrude, before attaching the battery cell stack to the bottom part of the frame.

14. The method of manufacturing a battery module according to claim 12, further comprising: a step of coating a thermally conductive resin onto the bottom part of the frame before attaching the battery cell stack to the bottom part of the frame.

15. The method of manufacturing a battery module according to claim 14, further comprising:
a step of forming a pad part on the bottom part of the frame before the step of coating the thermally conductive resin,
wherein pad part guides the coating position of the coated thermally conductive resin.

16. The method of manufacturing a battery module according to claim 12, wherein
the battery cell stack is inserted into the bottom part of the frame in a direction perpendicular to a stacking direction of a plurality of battery cells included in the battery cell stack.

17. A battery pack comprising the battery module according to claim 1.
